# FASCICULE DE BREVET EUROPEEN

(11) **EP 2 805 184 B1**
(45) Date de publication et mention de la délivrance du brevet: **09.12.2015**
(21) Numéro de dépôt: 13704155.4
(22) Date de dépôt: 11.01.2013
(51) Int. Cl.: G01S 13/56, G01S 13/58, G01S 13/88, G01S 7/40

(54) **APPAREIL DE DETECTION PAR ONDE ELECTROMAGNETIQUE DE MOUVEMENT D'UN CORPS MASQUE**
VORRICHTUNG MIT ELEKTROMAGNETISCHEN WELLEN ZUR ERKENNUNG DER BEWEGUNG EINES MASKIERTEN KÖRPERS
APPARATUS USING ELECTROMAGNETIC WAVES TO DETECT THE MOTION OF A MASKED BODY

(30) Priorité: 19.01.2012 FR 1250532
(43) Date de publication de la demande: 26.11.2014
(73) Titulaire: Office National d'Etudes et de Recherches Aérospatiales (ONERA), 92320 Châtillon (FR)
(72) Inventeur: CHRISTOPHE, Florent, F-31130 Pin Balma (FR); ISSAC, François, F-31290 Villenouvelle (FR)
(74) Mandataire: Cabinet Plasseraud
(86) Numéro de dépôt international: PCT/FR2013/050074
(87) Numéro de publication internationale: WO 2013/107969

(56) Documents cités:
- US-A- 6 031 482
- US-A1- 2006 028 369
- Greneker: "RADAR flashlight for through the wall detection of humans", , 13 avril 1998 (1998-04-13), pages 280-285, XP055032785, DOI: http://dx.doi.org/10.1117/12.327172 Extrait de l'Internet: URL:http://scitation.aip.org/getpdf/servle t/GetPDFServlet?filetype=pdf&id=PSISDG0033 75000001000280000001&idtype=cvips&doi=10.1 117/12.327172&prog=normal [extrait le 2012-07-16]
- YA JUN WANG ET AL: "Introduction to reverberation chamber test method and a two-stirrer mini-reverberation chamber", ELECTROMAGNETIC COMPATIBILITY, 2002 3RD INTERNATIONAL SYMPOSIUM ON MAY 21-24, 2002, PISCATAWAY, NJ, USA,IEEE, 21 mai 2002 (2002-05-21), pages 397-400, XP010630640, ISBN: 978-0-7803-7277-1
- NICUSOR BIRSAN ET AL: "Time-frequency analysis in Doppler radar for noncontact cardiopulmonary monitoring", E-HEALTH AND BIOENGINEERING CONFERENCE (EHB), 2011, IEEE, 24 novembre 2011 (2011-11-24), pages 1-4, XP032114548, ISBN: 978-1-4577-0292-1
- MAAREF N ET AL: "A Study of UWB FM-CW Radar for the Detection of Human Beings in Motion Inside a Building", IEEE TRANSACTIONS ON GEOSCIENCE AND REMOTE SENSING, IEEE SERVICE CENTER, PISCATAWAY, NJ, US, vol. 47, no. 5, 1 mai 2009 (2009-05-01), pages 1297-1300, XP011253582, ISSN: 0196-2892 cité dans la demande
- Kevin Goldsmith: "Reverberation Chambers - What Are They?", , 31 décembre 1999 (1999-12-31), pages 1-3, XP055032943, Extrait de l'Internet: URL:http://www.ieee.org/organizations/pubs /newsletters/emcs/fall99/reverb.htm [extrait le 2012-07-17] cité dans la demande

## Description

La présente invention concerne un appareil et un procédé de détection par onde électromagnétique, de mouvement d'un corps masqué à la vue à l'intérieur d'un chargement.

Certaines situations nécessitent de contrôler qu'un chargement ne contienne pas d'êtres vivants, humains ou animaux. Tel peut être le cas lors de contrôles aux frontières, par exemple, pour rechercher des passagers clandestins dans des véhicules ou lutter contre le commerce d'espèces animales vivantes qui sont protégées. Certaines méthodes qui sont utilisées pour de tels contrôles sont notamment la fouille manuelle, le recours à des chiens de dépistage, l'utilisation de capteurs acoustiques, la radiographie par rayons X, ou l'analyse de gaz d'émanations qui proviennent du chargement. Mais ces méthodes présentent les inconvénients suivants, variables selon la méthode utilisée et les circonstances dans lesquelles le contrôle est effectué :
- la durée du contrôle peut être longue, et incompatible avec un flux de chargements qui transitent par le point de contrôle ;
- un coût des moyens qui sont mis en oeuvre, ou un coût opératoire du contrôle lui-même, peut être élevé ;
- la détection peut être peu fiable ou reposer sur l'interprétation d'images par un opérateur, ou présenter un taux de fausses-alarmes qui est élevé ;
- le contrôle peut être dangereux pour un opérateur de sa mise en oeuvre, ou pour les personnes recherchées, notamment lorsque des rayonnements ionisants sont utilisés ; et
- l'exécution du contrôle peut nécessiter un accès à l'intérieur du chargement, pour un opérateur ou une sonde de détection qui doit y être placée.

Particulièrement, de nombreuses circonstances peuvent empêcher d'accéder à l'intérieur du chargement, pour un opérateur ou une sonde de détection : soit par manque de temps, soit parce que le chargement est contenu dans une enceinte hermétique, soit à cause de risques liés à la nature inconnue du chargement, soit à cause de scellés qui ont été apposés sur le chargement, ou pour d'autres raisons. Il est alors nécessaire que les moyens de contrôle qui sont utilisés soient non-intrusifs, c'est-à-dire que la détection puisse être effectuée à distance à travers une enveloppe, des parois ou une cuve qui renferme le chargement. De plus, la méthode de détection qui est mise en oeuvre doit posséder une sensibilité de détection suffisante pour procurer un niveau élevé de fiabilité du contrôle.

Le document qui est intitulé «A Study of UWB FM-CW Radar for the Detection of Human Beings in Motion Inside a Building», de N. Maaref et al., IEEE Transactions on Geoscience and Remote Sensing, Vol. 47, No. 5, May 2009, propose une méthode de détection qui est basée sur la perturbation des propriétés de diffraction électromagnétique que cause la présence d'un être vivant en mouvement derrière une paroi. La sensibilité qui est obtenue permet de révéler une personne qui se déplace dans un bâtiment, et pourrait même être suffisante si la paroi est peu absorbante et s'il n'y a pas d'autres obstacles interposés pour détecter des mouvements d'être vivant qui ont des amplitudes beaucoup plus faibles, tels que des mouvements respiratoires, des battements cardiaques, etc.

Le document US 6,031,482 propose un système radar de détection et de localisation d'un individu grâce à ses seuls mouvements respiratoires, par exemple pour une victime qui est ensevelie par une avalanche de neige. Toutefois, la sensibilité de détection n'est pas suffisante pour être appliquée à certains chargements, notamment lorsque le contenu du chargement est inconnu et hétérogène ou que son enveloppe est partiellement métallique.

Enfin, le document US 2006/028369 concerne une amélioration d'un radar qui est utilisé comme détecteur de présence. La détection d'individus est fondée sur celle des mouvements qui sont causés par un être vivant, y compris par sa respiration ou son battement cardiaque. L'amélioration vise à supprimer des interférences parasites qui sont provoquées avec un tel détecteur, par un déplacement du système radar lui-même. La détection de présence qui est décrite est réalisée en champ ouvert, par exemple à travers une cloison.

Dans ces conditions, un but de la présente invention consiste à fournir un nouveau moyen de détection de mouvement à l'intérieur d'un chargement, qui ne présente pas les inconvénients des systèmes connus ou pour lequel ces inconvénients sont réduits.

En particulier, un premier but de l'invention consiste à fournir un moyen de détection qui soit compatible avec des configurations et des tailles de chargement variables. Notamment, le moyen de détection est recherché pour être encore efficace lorsqu'un chargement est contenu dans une enveloppe métallique qui présente des ouvertures qui sont petites ou restreintes pour la pénétration par un rayonnement électromagnétique.

Un deuxième but de l'invention consiste à fournir un moyen de détection qui ne dépende pas des facultés d'interprétation d'un opérateur, et ne présente pas de danger pour un opérateur en charge de superviser la détection.

Un troisième but de l'invention consiste à détecter un mouvement de corps à l'intérieur d'un chargement avec une fiabilité de détection qui soit élevée, notamment par rapport à des sources parasites de mouvement ou de rayonnement qui peuvent être présentes à l'extérieur du chargement.

Pour atteindre ces buts et d'autres, l'invention propose un appareil de détection par onde électromagnétique, de mouvement d'un corps qui est masqué à la vue dans un chargement au moins partiellement transparent aux ondes électromagnétiques. L'appareil de détection comprend :
- un dispositif d'enceinte, qui est adapté pour contenir le chargement et pour former une cage de Faraday autour du chargement ;
- un système d'émission-réception radiofréquence, qui est adapté pour produire un rayonnement électromagnétique primaire à l'intérieur de la cage de Faraday et du chargement, et pour détecter au moins un rayonnement électromagnétique secondaire généré à partir du rayonnement primaire par un mouvement survenant dans le chargement ; et
- un système d'analyse spectrale, qui est connecté en entrée à une sortie de détection du système d'émission-réception, et qui est adapté pour produire un signal d'alarme lorsque le rayonnement secondaire présente des caractéristiques spectrales qui sont comprises dans une cible de détection mémorisée.

La fréquence du rayonnement primaire est adaptée pour que la cage de Faraday et le chargement possèdent des dimensions aptes à réverbérer les rayonnements primaire et secondaire. De plus, le système d'analyse spectrale est adapté pour analyser le rayonnement secondaire dans deux intervalles spectraux qui sont situés chacun entre 0,1 Hz et 100 Hz à partir de la fréquence du rayonnement primaire, de chaque côté de celle-ci.

Ainsi, selon l'invention, le chargement à contrôler est enfermé à l'intérieur d'une enceinte faisant fonction de cage de Faraday pendant le contrôle. Une telle configuration constitue une isolation électromagnétique au moins partielle entre l'intérieur et l'extérieur de l'enceinte, dont résultent les avantages suivants :
- le rayonnement électromagnétique qui est utilisé pour la détection est produit à l'intérieur de l'enceinte et reste confiné dans celle-ci, si bien que les contraintes du règlement des radiocommunications sont réduites, et qu'un opérateur du contrôle qui est situé à l'extérieur de l'enceinte n'est pas exposé au rayonnement ;
- les rayonnements utiles, primaire et secondaire, qui sont confinés dans l'enceinte sont moins sensibles à des sources de mouvements, de vibrations, ou de rayonnements parasites qui sont éventuellement présentes à l'extérieur de l'enceinte ; et
- le confinement du rayonnement réduit les pertes radiatives dans l'environnement, si bien qu'une puissance d'alimentation qui est réduite est suffisante pour produire une intensité de rayonnement fixée dans l'enceinte, et adaptée par rapport à la sensibilité du dispositif de détection.

L'enceinte est réverbérante pour le rayonnement confiné, si bien que les rayonnements primaire et secondaire sont réfléchis dans toutes les directions à l'intérieur de l'enceinte. De cette façon, le rayonnement peut pénétrer dans des parties du chargement et en ressortir, même si celles-ci sont situées dans des zones d'ombre par rapport à une exposition directe au système d'émission-réception. Par exemple, le chargement peut être protégé par une enveloppe métallique qui ne présente qu'une ouverture réduite, ou le corps peut être contenu lui-même dans un récipient métallique qui ne présente qu'une ouverture réduite. Il est alors exposé néanmoins à une partie du rayonnement primaire, grâce à l'isotropie ou une quasi-isotropie de la circulation du rayonnement dans l'enceinte. Pour la même raison, le rayonnement secondaire qui est généré par le mouvement du corps à l'intérieur du récipient ou de l'enveloppe, diffuse hors du récipient ou de l'enveloppe par son ouverture puis parvient au système de réception après des réflexions multiples sur les parois de l'enceinte, à l'intérieur de celle-ci.

De façon connue, comme expliqué par exemple dans la référence disponible par internet à l'adresse http://www.ieee.org/organizations/pubs/newsletters/emcs/fall99/reverb.htm, une enceinte est réverbérante pour un rayonnement lorsque ce rayonnement se propage par réflexions successives sur les parois de l'enceinte, à l'intérieur de celle-ci. Le rayonnement est alors réparti de façon quasi-isotrope dans l'ensemble du volume interne de l'enceinte et passe en chaque point de ce volume selon une multiplicité de directions de propagation. Pour cela, l'enceinte possède de préférence des dimensions internes qui sont très supérieures à la longueur d'onde du rayonnement, par exemple dans un rapport d'une ou plusieurs dizaines. L'isotropie de la répartition du rayonnement dans le volume interne de l'enceinte peut être améliorée en changeant la fréquence de ce rayonnement, de façon à éliminer des zones d'ombres résiduelles.

Dans le cadre de la présente invention, le rayonnement primaire est celui qui est produit par le système d'émission à l'intérieur de l'enceinte, directement ou après avoir subi des réflexions à l'intérieur de l'enceinte réverbérante. Le rayonnement secondaire résulte de l'interaction entre le rayonnement primaire et la partie mobile qui est présente éventuellement à l'intérieur de l'enceinte. Son intensité peut être très faible. Pragmatiquement, on peut supposer que le rayonnement secondaire possède un écart fréquentiel avec le rayonnement primaire qui est inclus dans la plage d'analyse spectrale des systèmes de détection utilisés.

Dans le cadre de la présente invention, on appelle enfin cible de détection un ensemble de caractéristiques spectrales prédéterminées qui sont examinées pour le rayonnement secondaire, et qui correspondent à un type recherché pour la source de mouvement. De façon générale, la cible de détection correspond à des mouvements qui seraient générés par des parties mobiles du corps.

Le corps qui est éventuellement présent dans le chargement est détecté par des modifications de certaines des caractéristiques spectrales du rayonnement secondaire, qui sont provoquées par des mouvements du corps lui-même. En particulier, le mouvement du corps peut produire le rayonnement secondaire par effet Doppler à partir du rayonnement primaire, étant entendu qu'un tel effet Doppler apparaît quelle que soit la structure d'onde du rayonnement primaire à l'emplacement du corps. En particulier, du fait de la réverbération dans l'enceinte, le rayonnement primaire présente des composantes qui se propagent dans plusieurs directions différentes à l'endroit du corps. Ces composantes de rayonnement peuvent alors être affectées chacune différemment par le mouvement du corps, notamment en fonction de la configuration de la partie mobile du corps, et des orientations relatives du mouvement de cette partie mobile et de la direction de propagation de chaque composante de rayonnement. En général, la signature spectrale du mouvement du corps dans le rayonnement qui est détecté est complexe, mais elle présente des caractéristiques révélatrices du mouvement. Ces caractéristiques révélatrices concernent notamment l'écart fréquentiel et/ou le rapport d'intensité entre les rayonnements primaire et secondaire. De façon générale, les mouvements de corps qui peuvent être détectés avec l'appareil de l'invention, peuvent avoir des vitesses ou des amplitudes qui produisent des effets Doppler très faibles, usuellement désignés par micro-Doppler.

Grâce à l'utilisation de rayonnement radiofréquence, l'appareil permet un contrôle très efficace du contenu du chargement, par rapport à la présence de parties mobiles, et notamment par rapport à des mouvements corporels d'êtres vivants qui seraient dissimulés dans le chargement. En effet, tous les matériaux qui sont isolants électriquement et ceux qui possèdent une faible conduction électrique, sont transparents ou partiellement transparents pour le rayonnement radiofréquence. De plus, grâce à la configuration réverbérante de l'enceinte, un élément métallique qui n'est pas transparent par lui-même pour le rayonnement ne provoque pas ou peu de zone d'ombre grâce à la multiplicité des directions de propagation du rayonnement dans l'enceinte. Seules des parties mobiles qui seraient contenues dans des récipients ou des enveloppes métalliques totalement fermés ne peuvent pas être détectées en utilisant l'appareil de l'invention. Pour que l'appareil réalise néanmoins une détection efficace en présence de tels récipients ou enveloppes métalliques, il suffit que ceux-ci soient ouverts au moins partiellement avant que la séquence de détection soit appliquée au chargement.

Pour procurer une sensibilité maximale de détection par rapport à des mouvements qui surviennent dans le chargement, l'appareil peut présenter en outre certaines des caractéristiques additionnelles suivantes, prises isolément ou en combinaison de plusieurs d'entre elles :
- le rayonnement primaire peut posséder une fréquence qui est comprise entre 100 MHz (mégahertz) et 100 GHz (gigahertz), de préférence entre 500 MHz et 5000 MHz;
- le système d'émission-réception radiofréquence peut être de type hétérodyne ;
- la cible de détection peut correspondre à des mouvements proprioceptifs, respiratoires ou cardiaques d'un être vivant, éventuellement endormi ou cherchant à rester immobile, qui constitue le corps ;
- le rayonnement primaire peut posséder plusieurs composantes avec des fréquences respectives qui sont différentes, notamment de façon à réduire les zones d'ombre résiduelles ; et
- le système d'émission-réception radiofréquence peut être adapté pour varier la fréquence du rayonnement primaire selon une séquence de valeurs déterminées, avec un délai de latence de réception entre deux valeurs de fréquence qui sont commandées successivement.

En outre, le dispositif d'enceinte qui forme la cage de Faraday peut posséder plusieurs configurations, adaptées à des types de chargements variables ou à des circonstances de contrôle différentes. Parmi ces configurations, les suivantes sont préférées :
- le dispositif d'enceinte peut comprendre au moins une porte qui participe à la cage de Faraday lorsque la porte est fermée ;
- le dispositif d'enceinte peut comprendre une enceinte close de stationnement pour véhicule, avec au moins une porte d'entrée pour le véhicule, des parois, un plafond et un sol qui sont tous conducteurs électriquement ;
- le dispositif d'enceinte peut comprendre une tente dont les surfaces sont conductrices électriquement, la tente étant ouverte dans une section inférieure, et adaptée pour être amenée par le dessus du chargement et posée autour de celui-ci sur une portion de sol rendue conductrice électriquement. Par exemple, la portion de sol peut être rendue conductrice par la mise en place préalable d'un tapis métallisé, ou bien un liquide qui est conducteur électriquement peut être répandu préalablement sur la portion de sol, ou injecté dans celle-ci. De cette façon, la portion de sol peut posséder un niveau de conduction électrique qui soit suffisant pour former la cage de Faraday avec la tente. Eventuellement, la tente peut être adaptée pour être déployée à partir d'une configuration pliée, puis repliée après utilisation ; et
- enfin, l'appareil de détection peut comprendre en outre un système de convoyeur, qui est adapté pour introduire le chargement dans le dispositif d'enceinte.

L'invention propose aussi un procédé de détection par onde électromagnétique, de mouvement d'un corps qui est masqué à la vue dans un chargement au moins partiellement transparent aux ondes électromagnétiques. Le procédé comprend les étapes suivantes :
/1/ déterminer une cible de détection pour des caractéristiques spectrales, correspondant à des mouvements qui seraient générés par des parties mobiles d'un corps ;
/2/ former une cage de Faraday autour du chargement ;
/3/ à l'intérieur de la cage de Faraday, produire un rayonnement électromagnétique primaire qui possède au moins une fréquence adaptée pour que ce rayonnement soit réverbéré à l'intérieur de la cage de Faraday et du chargement, et activer un système de détection de rayonnement électromagnétique secondaire dans deux intervalles spectraux qui sont situés chacun entre 0,1 Hz et 100 Hz à partir de la fréquence du rayonnement primaire, de chaque côté de celle-ci;
/4/ analyser spectralement le rayonnement secondaire détecté, pour produire des caractéristiques spectrales de celui-ci ; et
/5/ produire un signal d'alarme lorsque les caractéristiques spectrales du rayonnement secondaire sont comprises dans la cible de détection.

Un tel procédé de détection peut être mis en oeuvre en utilisant un appareil de détection selon l'invention, tel que décrit précédemment.

Le corps peut appartenir à un être vivant qui est situé à l'intérieur du chargement, si bien que le procédé de détection peut être appliqué à la recherche d'être vivant, humain ou animal, dans le chargement.

Enfin, dans des perfectionnements de l'invention, le procédé de détection peut comprendre en outre une étape supplémentaire d'apprentissage pour éviter des fausses-alarmes susceptibles d'être provoquées par des mouvements parasites qui sont externes au corps, et qui produisent des caractéristiques spectrales pour le rayonnement secondaire comprises dans la cible de détection. Un tel apprentissage peut aussi éviter des fausses-alarmes susceptibles d'être provoquées par des mouvements sans intérêt par rapport à un objectif de recherche prédéfini pour le corps.

D'autres particularités et avantages de la présente invention apparaîtront dans la description ci-après d'exemples de réalisation non limitatifs, en référence aux dessins annexés, dans lesquels :
- les figures 1 a à 1 c illustrent respectivement trois configurations d'appareils de détection selon l'invention ;
- la figure 2 est un schéma synoptique d'un système d'émission-réception et d'analyse, possible pour un appareil de détection selon l'invention ;
- la figure 3 illustre une distribution spectrale d'un rayonnement détecté lors d'une utilisation d'un appareil selon l'invention ; et
- les figures 4a et 4b illustrent respectivement deux séquences d'émission radiofréquence pouvant être utilisées dans un appareil de détection selon l'invention.

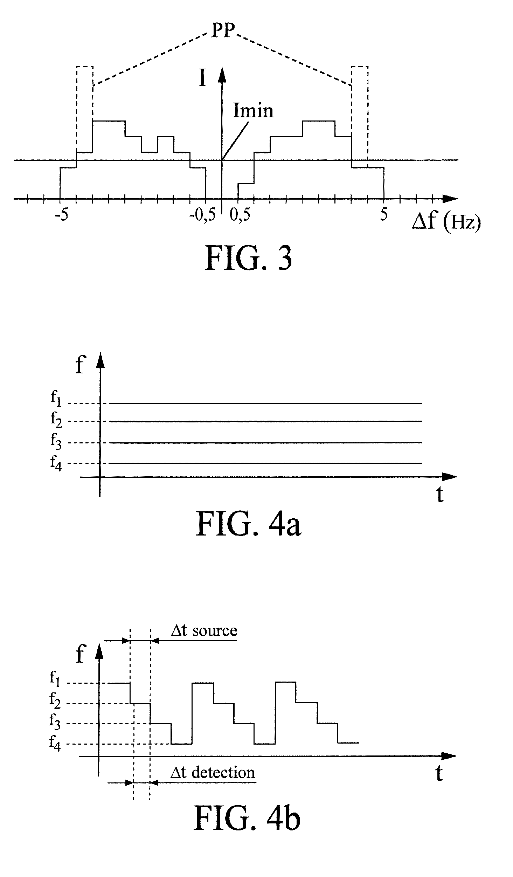

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques. Enfin, dans les figures 3, 4a et 4b, les notations adoptées sont les suivantes : t désigne le temps pendant une séquence de fonctionnement de l'appareil, f est une fréquence de rayonnement produit ou détecté, et Δf est un écart entre la fréquence du rayonnement produit et celle d'un rayonnement détecté.

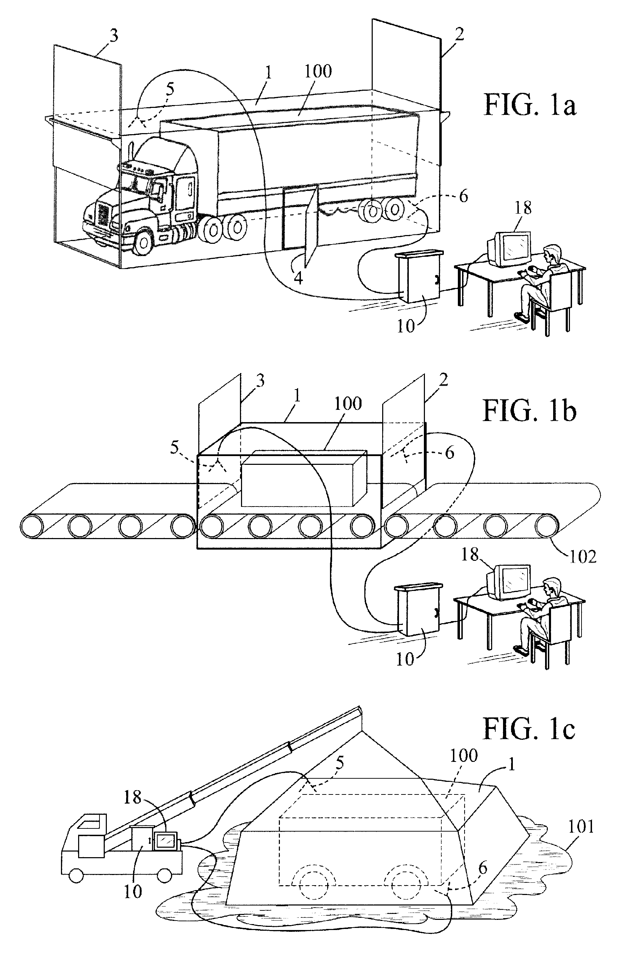

Conformément aux figures 1 a à 1 c, un appareil de détection selon l'invention est utilisé dans une station de contrôle de chargements. L'appareil comprend une enceinte 1 qui est adaptée pour pouvoir contenir le chargement 100, éventuellement avec des objets et matériels annexes, tels qu'un conteneur du chargement, une remorque, un camion de transport, un système de convoyeur, etc. Un des avantages de l'invention réside en ce qu'elle permet de contrôler le chargement 100 sans le décharger ni le séparer de ses matériels de transport ou de convoyage, si bien qu'aucune manipulation du chargement 100 n'est nécessaire. De cette façon, le contrôle peut être rapide, notamment pour être réalisé sur un grand nombre de chargements successifs.

L'enceinte 1 forme une cage de Faraday autour du chargement 100. Pour cela, l'enceinte 1 possède des parois latérales, un plafond et un sol qui sont conducteurs électriquement, de façon à réfléchir un rayonnement électromagnétique à l'intérieur de l'enceinte 1. En outre, ces surfaces de l'enceinte 1 sont adaptées pour être le plus imperméable possible par rapport à des fuites de rayonnement de l'intérieur de l'enceinte 1 vers l'extérieur. De même, l'enceinte 1 empêche le plus possible que des rayonnements électromagnétiques externes qui ont des longueurs d'onde dans l'intervalle spectral utilisé ne puissent pénétrer dans l'enceinte. L'Homme du métier sait réaliser de telles cages de Faraday, en utilisant des surfaces continues métalliques ou métallisées qui sont jointes électriquement entre elles, ou des treillages métalliques avec des mailles suffisamment fines. En particulier, le sol peut contenir un grillage métallique qui est noyé dans une chape de ciment. L'enceinte 1 est donc caractérisée par sa fonction d'écran contre la transmission de rayonnement électromagnétique, à la fois de l'intérieur vers l'extérieur et de l'extérieur vers l'intérieur, mais elle peut avoir des modes de réalisation très variés.

La figure 1 a montre une enceinte 1 qui constitue un hangar de stationnement, capable d'enfermer un véhicule de transport routier de très grand gabarit. Avantageusement ce hangar peut être conçu pour faciliter l'entrée et la sortie du véhicule afin de réduire la durée du contrôle. Pour cela, il peut avoir la forme d'un tunnel traversant, en étant équipé d'une porte d'entrée 2 et d'une porte de sortie 3 pour le véhicule, qui sont situées à des extrémités opposées du hangar pour réduire au maximum les manoeuvres du véhicule. Une porte d'évacuation de personnes 4 peut aussi être ajoutée, pour permettre au conducteur du véhicule de sortir rapidement de l'enceinte 1 après avoir arrêté le véhicule. La porte 4 peut en effet être fermée plus rapidement que les portes 2 et 3 dont les dimensions supérieures nécessitent des moyens d'actionnement plus conséquents, et souvent plus lents. Evidemment, toutes les portes 2 à 4 doivent aussi être réfléchissantes pour le rayonnement électromagnétique qui est utilisé pour le contrôle, et équipées de joints périphériques appropriés pour assurer une continuité de conduction électrique entre ces portes et les parois fixes de l'enceinte 1.

La figure 1b montre une alternative de réalisation de l'enceinte 1, qui est adaptée pour contrôler un conteneur 100. Dans ce cas, l'enceinte 1 peut être traversée par un convoyeur à rouleaux 102, avec une station d'arrêt de chaque conteneur 100 dans une position où l'enceinte 1 peut être entièrement refermée autour du conteneur. Un module du convoyeur 102 peut être entièrement contenu dans l'enceinte 1, si le sol de l'enceinte 1 en dessous de ce module de convoyeur est conducteur électriquement pour fermer la cage de Faraday par en dessous.

Enfin, la figure 1c montre une station de contrôle selon l'invention, qui peut être transportée et installée rapidement à l'endroit d'un chargement 100 à contrôler, tel qu'une remorque abandonnée. Dans ce cas, l'enceinte 1 peut être réalisée sous forme d'une tente souple et dépliable, en grillage ou en toile conductrice. Pour produire la fonction de cage de Faraday, le sol doit être suffisamment conducteur électriquement en dessous du chargement 100, et un tapis conducteur pourrait être déroulé ou déployé à cet effet. Eventuellement, un liquide ionique 101, notamment une solution saline, peut être répandue sur le sol ou injectée dans le sol sous le chargement 100, pour le rendre conducteur électriquement sans déplacer le chargement 100. Une continuité d'écran électromagnétique doit encore être assurée entre la tente dépliée et le sol rendu conducteur, par exemple en appuyant le bord périphérique inférieur de la tente sur le sol.

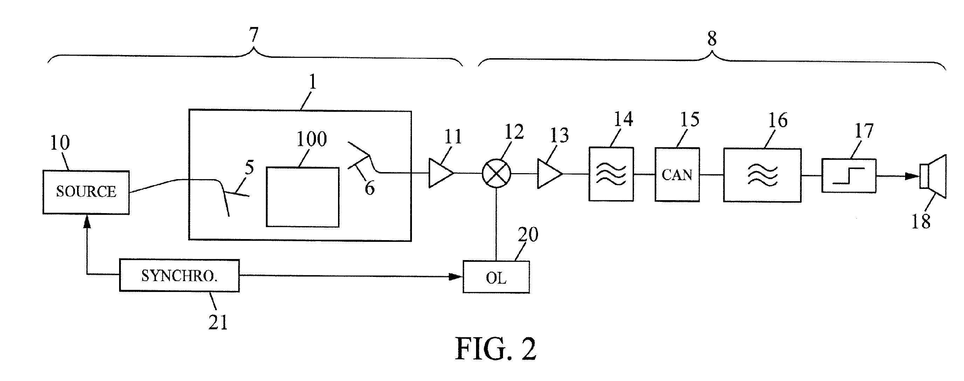

L'appareil de détection comprend en outre un système d'émission-réception radiofréquence 7 et un système d'analyse spectrale 8 (figure 2). Le système d'émission-réception radiofréquence 7 comprend lui-même une antenne d'émission 5 et une antenne de détection 6 qui sont situées à l'intérieur de l'enceinte 1. Le système d'analyse spectrale 8 peut être combiné avec une source 10 du rayonnement radiofréquence, d'une des façons connues de l'Homme du métier, par exemple pour réaliser une détection hétérodyne du rayonnement qui est perçu par l'antenne de détection 6. Une telle combinaison peut aussi faciliter une synchronisation entre des séquences d'émission et de détection du rayonnement radiofréquence.

Les antennes 5 et 6 peuvent éventuellement être confondues, l'Homme du métier sachant ajouter un dispositif de séparation des ondes entrantes et sortantes d'une antenne unique.

Grâce à sa fonction de cage de Faraday, l'enceinte 1 réverbère à l'intérieur d'elle-même le rayonnement électromagnétique primaire qui est produit par l'antenne d'émission 5, ainsi que le rayonnement électromagnétique secondaire qui est perçu par l'antenne de réception 6. De façon générale, les dimensions intérieures de l'enceinte 1 sont au moins dix fois plus grandes que des longueurs d'onde des rayonnements primaire et secondaire. Par exemple, la dimension intérieure la plus petite de l'enceinte 1 peut être de quelques mètres, alors que le rayonnement primaire qui est utilisé peut posséder une fréquence de l'ordre de 1000 MHz, qui correspond à une longueur d'onde proche de 30 cm. La ou les fréquence (s) du rayonnement secondaire a (ont) une (des) valeur(s) qui est (sont) très proche(s) de celle du rayonnement primaire, du fait que le rayonnement secondaire soit généré par des mouvements de parties mobiles qui sont lentes par rapport au rayonnement primaire. Dans ces conditions, les rayonnements primaire et secondaire se propagent de manière analogue dans l'ensemble du volume intérieur de l'enceinte 1.

L'antenne d'émission 5 peut produire le rayonnement primaire avec une puissance de 10 mW (milliwatt) par exemple. Un tel niveau de puissance permet d'obtenir une bonne sensibilité de détection, sans exposer toutefois un individu qui serait éventuellement présent à l'intérieur du chargement 100 à un niveau de champ électromagnétique supérieur aux limites autorisées.

Le chargement 100 peut contenir lui-même des volumes imperméables au rayonnement électromagnétique, tels que des récipients métalliques, ou présenter des configurations qui forment des zones protégées par rapport à la pénétration du rayonnement. Dans ces cas, le contrôle du chargement 100 par rapport à la présence de mouvements est efficace pour tout le volume du chargement à l'exception des volumes imperméables ou des zones protégées. Avantageusement, des récipients métalliques qui sont identifiés à l'intérieur du chargement 100 pourront être ouverts pendant le contrôle, afin d'exposer leur volume interne au rayonnement. Il est indiqué à ce propos que les conteneurs normalisés ont des planchers en bois, si bien que le rayonnement peut pénétrer dans le conteneur et en ressortir par sa face inférieure.

Selon une première architecture possible pour le système d'émission-réception radiofréquence, celui-ci peut être du type hétérodyne pour procurer une sensibilité de détection qui soit compatible avec la recherche de mouvements qui surviendraient dans le chargement 100.

Selon une possibilité alternative illustrée par la figure 2, le système d'émission-réception 7 comporte la source de signal radiofréquence 10 qui alimente l'antenne d'émission 5 pour produire le rayonnement primaire. Par ailleurs, une sortie de l'antenne de détection 6 est connectée au système d'analyse spectrale 8 qui comprend dans l'ordre : un premier amplificateur 11, un mélangeur 12, un second amplificateur 13, un filtre analogique 14, un convertisseur analogique-numérique 15 noté CAN, un filtre numérique 16, un comparateur à seuil 17 et un dispositif d'alarme visuel (figures 1a-1c) ou sonore (figure 2) référencé 18. Les connexions des antennes 5 et 6 respectivement avec la source 10 et l'amplificateur 11 peuvent être constituées par des câbles coaxiaux de transmission radiofréquence. Le principe de fonctionnement d'une telle chaîne de détection et d'analyse est connu. Le mélangeur 12 reçoit simultanément le signal de détection amplifié sur une première entrée, et un signal de référence qui est produit par un oscillateur local noté OL et référencé 20. Pour cela, une unité de synchronisation 21, notée SYNCHRO, contrôle à la fois la source 10 et l'oscillateur local 20 pour coordonner des séquences d'émission du rayonnement primaire et de détection du rayonnement secondaire. Le gabarit du filtre 16 et le seuil du comparateur 17 qui sont réalisés numériquement correspondent à la cible de détection. Par exemple, la cible de détection peut contenir une première condition selon laquelle la fréquence d'une des composantes qui est isolée par le filtre 16 et transmise par le comparateur 17 présente un écart de fréquence avec le rayonnement primaire supérieur à une largeur spectrale du signal d'émission de la source 10. Cette largeur spectrale peut être par exemple de 0,5 Hz. Une seconde condition de la cible de détection peut être une valeur-limite supérieure pour le même écart de fréquence, par exemple une valeur-limite supérieure de 5 Hz, afin de supprimer des contributions parasites au signal qui est transmis par le système d'analyse 8. De telles contributions parasites peuvent être dues à des mouvements qui surviennent à l'intérieur de l'enceinte 1, qui sont trop rapides pour être attribués à des parties mobiles d'êtres vivants. Elles peuvent aussi être dues à des rayonnements électromagnétiques parasites qui proviennent d'appareils externes à l'enceinte 1, pour lesquelles l'écrantage par la cage de Faraday n'est pas complètement efficace. Enfin, des mouvements parasites peuvent aussi être détectés, qui ont des origines externes au chargement 100 mais qui sont transmis à ce chargement ou à l'enceinte 1, par exemple sous forme de résonances ou de vibrations mécaniques. Tel peut être le cas pour des gouttes de pluie qui tombent sur le toit de l'enceinte 1, des rafales de vent qui la font vibrer, des courants d'air qui s'infiltrent à l'intérieur de l'enceinte 1 par des interstices de celle-ci ou des vibrations qui sont transmises par le sol. Toutefois, pour réduire les composantes parasites détectées qui seraient dues à de telles sources externes, l'enceinte 1 peut être pourvue d'un double-toit étanche. De même le véhicule et/ou le chargement 100 pourra (pourront) être séché(s) avant le contrôle s'il(s) vien(nen)t d'être exposé(s) à une pluie importante qui provoquerait un ruissellement à l'intérieur de l'enceinte 1 pendant le contrôle. Pour un dispositif de contrôle qui est conforme à la figure 1b, les modules de convoyeur 102 qui sont situés à proximité de l'enceinte 1 sont de préférence arrêtés pendant le contrôle, pour éviter aussi les vibrations que ces modules peuvent générer et qui peuvent être transmises par le sol jusqu'à l'intérieur de l'enceinte 1.

Pour posséder une stabilité en fréquence suffisante, l'oscillateur local 20 peut être sélectionné afin de détecter des mouvements même lents qui surviendraient à l'intérieur du chargement 100.

Dans une configuration alternative, le filtre 16 peut être remplacé par une batterie de filtres parallèles pour effectuer une analyse spectrale, qui peut notamment être réalisée par transformation de Fourier rapide, connue sous l'acronyme FFT pour Fast Fourier Transform en anglais, de manière à mieux différencier les effets produits par les mouvements d'un corps et les effets des parasites. La figure 3 montre schématiquement un résultat d'analyse spectrale du rayonnement secondaire qui peut alors être obtenu par le système 8. L'identification de composantes spectrales dans le rayonnement secondaire peut être limitée à un intervalle qui s'étend par exemple jusqu'à 5 Hz de part et d'autre du rayonnement primaire. Ce rayonnement primaire est pris comme origine dans le diagramme de la figure 3. L'analyseur spectral 16 est de préférence adapté pour procurer une résolution qui est inférieure ou égale à 0,5 Hz, par exemple égale à 0,1 Hz, pour la fréquence de chaque composante spectrale du rayonnement secondaire qui est identifiée. Par exemple, la résolution spectrale avec laquelle le rayonnement secondaire est analysé peut être 10 à 100 fois plus petite que la largeur de l'intervalle d'analyse spectrale autour de la fréquence du rayonnement primaire. L'analyse spectrale qui est ainsi effectuée peut permettre de ne conserver que les composantes spectrales qui dépassent le seuil noté Iₘᵢₙ pour distinguer un signal de détection qui est significatif par rapport à un bruit de mesure ou une limite de sensibilité de détection. Des méthodes de reconnaissance des formes connues de l'Homme du métier peuvent aussi être employées pour comparer le spectre qui est obtenu par l'analyseur 16 à des spectres relevés dans une phase préalable d'apprentissage, de façon à réduire les fausses alarmes et/ou préciser des caractéristiques de l'être vivant détecté.

De préférence, pour réduire d'éventuelles zones d'ombre dans le chargement et augmenter la sensibilité de la détection de mouvement, le rayonnement primaire qui est généré par la source 10 peut comporter plusieurs sous-porteuses qui ont des fréquences respectives différentes, par exemple quatre sous-porteuses de fréquence f₁ à f₄. A titre d'illustration, la fréquence f₁ peut être de l'ordre de 1000 MHz, et les fréquences f₂ à f₄ sont obtenues à partir de la fréquence f₁ en appliquant des incréments successifs de 25 MHz. Selon une première séquence d'émission-détection possible, et illustrée par la figure 4a, les quatre sous-porteuses du rayonnement primaire peuvent être produites continûment et simultanément pendant une durée qui peut être de l'ordre de 10 s (seconde), par exemple. La détection du rayonnement secondaire peut alors aussi être réalisée continûment pendant cette durée par quatre chaînes identiques à celle décrite précédemment, et adaptées chacune à l'une des quatre fréquences.

Selon une seconde séquence d'émission-détection qui est équivalente mais plus économique à réaliser, et illustrée par la figure 4b, les différentes sous-porteuses du rayonnement primaire peuvent être produites successivement par un multiplexage temporel, dans des intervalles de temps séparés de durée Δt_{source}. Chacune des sous-porteuses est reconstituée par démultiplexage en sortie du convertisseur d'une chaîne de réception unique que l'on active de préférence avec une durée de latence après chaque début d'émission du rayonnement primaire avec une nouvelle fréquence, afin qu'une rémanence du rayonnement ou un régime transitoire dû à la réverbération par l'enceinte 1 ait disparu. Ainsi, la durée de réception Δt_{detection} pour chaque sous-porteuse de rayonnement primaire dans la séquence de la figure 4b est plus courte que la durée Δt_{source}. Par exemple, Δt_{source} et Δt_{detection} peuvent être respectivement égales à 100 µs (microseconde) et 80 µs, avec la succession des valeurs de fréquence du rayonnement primaire qui est répétée périodiquement.

L'énergie en sortie du filtre numérique 16 peut être cumulée pour les différentes sous-porteuses avant transmission au comparateur 17, mais on peut aussi, de façon à réduire encore la sensibilité au bruit selon la méthode connue sous la désignation de "p parmi n", comparer d'abord l'énergie en sortie du filtre 16 à un seuil pour chacune des sous-porteuses puis décider d'une détection si p au moins des n sous-porteuses ont conduit au dépassement de seuil, p et n étant des nombres entiers naturels non nuls.

Ainsi, l'appareil de détection qui constitue la station de contrôle de chargement, présente des caractéristiques de stabilité d'émission et de sensibilité de détection qui permettent d'identifier des contributions au rayonnement secondaire dues à un être vivant qui serait caché à l'intérieur du chargement 100. Cet être vivant, humain ou animal, est détecté par les mouvements volontaires, de réflexes ou vitaux qu'il produit, tels que son battement cardiaque, sa respiration, ou des réflexes de maintien de position corporelle. Ces mouvements produisent à partir du rayonnement primaire qui est émis dans l'enceinte 1, une ou plusieurs composante(s) spectrale(s) de rayonnement secondaire qui est (sont) détectée(s). Le ou les mécanisme(s) physique(s) par le(s)quel(s) les composantes de rayonnement secondaire sont produites importe(nt) peu quant à leur nature physique exacte. Toutefois, l'effet Doppler a été identifié par les inventeurs comme l'un des mécanismes physiques prépondérants, tout en étant de très faible amplitude. A cause de cette amplitude très faible, il est préférable que toute cause de mouvements qui serait déjà connue soit supprimée. Notamment, dans le cas de la station de contrôle de la figure 1a, le moteur et la climatisation du véhicule sont coupés et le conducteur est sorti de l'enceinte 1 par la porte 4 en refermant cette dernière.

Toutefois, certaines sources de composantes parasites qui sont présentes dans le rayonnement secondaire ne peuvent pas être éteintes. Dans ce cas, ces composantes parasites peuvent être caractérisées lors d'une étape d'apprentissage du système d'analyse 8, puis écartées lorsque le chargement 100 est contrôlé. Par exemple, une séquence de détection de mouvements peut être réalisée lorsque l'enceinte 1 est vide, c'est-à-dire sans le chargement 100. Le procédé de détection et d'analyse qui vient d'être décrit caractérise alors des contributions parasites au rayonnement secondaire, quelle que soit l'origine mécanique ou électromagnétique de ces contributions. Lorsque le procédé de détection et d'analyse est ensuite répété avec le chargement 100 introduit dans l'enceinte 1, les contributions parasites qui ont été précédemment identifiées avec l'enceinte 1 vide peuvent être éliminées de l'analyse du signal de détection. Les composantes de rayonnement secondaire qui sont indiquées en traits interrompus sur la figure 3 et référencée PP, pour pic parasite, et qui peuvent être produites par exemple par un mode vibratoire mécanique de l'enceinte à 4 Hz, sont une telle contribution d'origine externe au chargement 100, et sont éliminées par l'analyse spectrale du contrôle du chargement 100.

Evidemment, l'appareil de détection de l'invention peut être utilisé de la même façon pour rechercher la présence de tout mouvement qui surviendrait à l'intérieur du chargement 100, quelle que soit son origine et notamment même si ce mouvement est provoqué par un appareil au lieu d'un être vivant.

A la fin du contrôle, le conducteur du véhicule qui transporte le chargement 100 (figure 1 a) peut pénétrer à nouveau dans l'enceinte 1 par la porte 4. Les deux portes 2 et 3 sont ouvertes simultanément, pour que le véhicule du chargement 100 qui vient d'être contrôlé ressorte en même temps que le véhicule du chargement suivant à contrôler pénètre dans l'enceinte 1.

Enfin, les avantages les plus significatifs d'un appareil de détection qui est conforme à l'invention sont rappelés maintenant :
- l'appareil permet de rechercher et détecter un mouvement qui se produit dans un chargement, sans qu'un opérateur ne pénètre dans le chargement. Un effectif d'opérateurs pour le contrôle du chargement peut alors être réduit, et aucun opérateur n'est exposé aux risques qui sont liés à la pénétration dans un chargement inconnu ou à sa fouille manuelle ;
- aucun opérateur n'est astreint à une analyse d'image qui nécessite un repos fréquent pour remédier au risque d'une baisse d'attention ;
- la durée de contrôle d'un chargement est courte, et le résultat du contrôle est disponible immédiatement. Des contrôles peuvent ainsi être enchaînés les uns à la suite des autres lorsque des chargements en attente sont introduits successivement à l'intérieur de l'enceinte ;
- la cage de Faraday qui est mise en oeuvre réduit des composantes parasites qui sont éventuellement présentes dans le signal de détection ;
- il n'est pas nécessaire de décharger le chargement d'un véhicule ou d'une remorque de transport, ou encore d'un convoyeur, pour mettre en oeuvre le procédé de détection de l'invention ; et
- un opérateur du contrôle n'est pas exposé au rayonnement utilisé, puisque ce rayonnement reste confiné à l'intérieur de la cage de Faraday, et l'opérateur reste à l'extérieur de celle-ci.

## Revendications

1. Appareil de détection par onde électromagnétique, de mouvement d'un corps masqué à la vue dans un chargement (100) au moins partiellement transparent aux ondes électromagnétiques, ledit appareil comprenant :
- un dispositif d'enceinte (1) adapté pour contenir le chargement et pour former une cage de Faraday autour dudit chargement ;
- un système d'émission-réception radiofréquence (7) adapté pour produire un rayonnement électromagnétique primaire à l'intérieur de la cage de Faraday et du chargement, et pour détecter au moins un rayonnement électromagnétique secondaire généré à partir du rayonnement primaire par un mouvement survenant dans le chargement ; et
- un système d'analyse spectrale (8), connecté en entrée à une sortie de détection du système d'émission-réception, et adapté pour produire un signal d'alarme lorsque le rayonnement secondaire présente des caractéristiques spectrales qui sont comprises dans une cible de détection mémorisée,
dans lequel au moins une fréquence du rayonnement primaire est adaptée pour que la cage de Faraday et le chargement possèdent des dimensions aptes à réverbérer les dits rayonnements primaire et secondaire,
le système d'analyse spectrale est adapté pour analyser le rayonnement secondaire dans deux intervalles spectraux situés chacun entre 0,1 Hz et 100 Hz à partir de la fréquence du rayonnement primaire, de chaque côté de ladite fréquence du rayonnement primaire ; et
la cible de détection correspond à des mouvements générés par des parties mobiles d'un corps.

2. Appareil de détection selon la revendication 1, dans lequel le rayonnement primaire possède une fréquence comprise entre 100 MHz et 100 GHz.

3. Appareil de détection selon la revendication 1 ou 2, dans lequel le système d'émission-réception radiofréquence (7) est de type hétérodyne.

4. Appareil de détection selon l'une quelconque des revendications précédentes, dans lequel la cible de détection correspond à des mouvements proprioceptifs, respiratoires ou cardiaques d'un être vivant constituant ledit corps.

5. Appareil de détection selon l'une quelconque des revendications précédentes, dans lequel le rayonnement primaire possède plusieurs composantes avec des fréquences respectives différentes.

6. Appareil de détection selon l'une quelconque des revendications précédentes, dans lequel le système d'émission-réception radiofréquence (7) est adapté pour varier ladite au moins une fréquence du rayonnement primaire selon une séquence de valeurs déterminées, avec un délai de latence de réception entre deux valeurs de fréquence commandées successivement.

7. Appareil de détection selon l'une quelconque des revendications précédentes, dans lequel le dispositif d'enceinte (1) comprend au moins une porte (2-4) participant à la cage de Faraday lorsque la porte est fermée.

8. Appareil de détection selon l'une quelconque des revendications 1 à 7, dans lequel le dispositif d'enceinte (1) comprend une enceinte close de stationnement pour véhicule, avec au moins une porte d'entrée pour ledit véhicule, des parois, un plafond et un sol tous conducteurs électriquement.

9. Appareil de détection selon l'une quelconque des revendications 1 à 7, dans lequel le dispositif d'enceinte (1) comprend une tente à surfaces conductrices électriquement, ladite tente étant ouverte dans une section inférieure, et adaptée pour être amenée par le dessus du chargement et posée autour dudit chargement sur une portion de sol (101) conductrice électriquement.

10. Appareil de détection selon la revendication 9, dans lequel la tente est adaptée pour être déployée à partir d'une configuration pliée, puis repliée après utilisation.

11. Appareil de détection selon l'une quelconque des revendications 1 à 7, comprenant en outre un système de convoyeur (102) adapté pour introduire le chargement (100) dans le dispositif d'enceinte (1).

12. Procédé de détection par onde électromagnétique, de mouvement d'un corps masqué à la vue dans un chargement (100) au moins partiellement transparent aux ondes électromagnétiques, comprenant les étapes suivantes :
/1/ déterminer une cible de détection pour des caractéristiques spectrales, correspondant à des mouvements générés par des parties mobiles d'un corps ;
/2/ former une cage de Faraday autour du chargement ;
/3/ à l'intérieur de la cage de Faraday, produire un rayonnement électromagnétique primaire ayant au moins une fréquence adaptée pour que le rayonnement soit réverbéré à l'intérieur de la cage de Faraday et du chargement, et activer un système de détection de rayonnement électromagnétique secondaire dans deux intervalles spectraux situés chacun entre 0,1 Hz et 100 Hz à partir de la fréquence du rayonnement primaire, de chaque côté de ladite fréquence du rayonnement primaire;
/4/ analyser spectralement le rayonnement secondaire détecté, pour obtenir les caractéristiques spectrales dudit rayonnement secondaire ; et
/5/ produire un signal d'alarme lorsque les caractéristiques spectrales du rayonnement secondaire sont comprises dans la cible de détection.

13. Procédé de détection selon la revendication 12, mis en oeuvre en utilisant un appareil de détection selon l'une quelconque des revendications 1 à 11.

14. Procédé de détection selon la revendication 12 ou 13, suivant lequel le corps appartient à un être vivant situé à l'intérieur du chargement (100).

15. Procédé de détection selon l'une quelconque des revendications 12 à 14, comprenant en outre une étape supplémentaire d'apprentissage pour éviter des fausses-alarmes provoquées par des mouvements parasites qui sont externes au corps et qui produisent des caractéristiques spectrales pour le rayonnement secondaire comprises dans la cible de détection, ou pour éviter des fausses-alarmes provoquées par des mouvements sans intérêt par rapport à un objectif de recherche prédéfini pour le corps.

16. Procédé selon la revendication 13, suivant lequel l'appareil de détection est conforme à la revendication 9 et un liquide conducteur électriquement (101) est répandu préalablement sur la portion de sol ou injecté dans ladite portion de sol.

## Patentansprüche

1. Vorrichtung mit elektromagnetischen Wellen zur Erkennung der Bewegung eines vor der Sicht maskierten Körpers in einer für elektromagnetische Wellen zumindest teilweise durchlässigen Fracht (100), umfassend:
/1/ eine Umgrenzungseinrichtung (1), die ausgestaltet ist, die Fracht aufzunehmen und einen Faradaykäfig um die Fracht herum auszubilden;
/2/ ein Hochfrequenzsende- und -empfangssystem (7), das ausgestaltet ist, eine elektromagnetische Primärstrahlung innerhalb des Faradaykäfigs und der Fracht zu erzeugen und zumindest eine elektromagnetische Sekundärstrahlung, die aus der Primärstrahlung durch eine in der Fracht auftretende Bewegung erzeugt wird, zu erkennen; und
/3/ ein Spektralanalysesystem (8), das mit seinem Eingang an einen Erkennungsausgang des Sende- und Empfangssystems angeschlossen und ausgestaltet ist, ein Alarmsignal zu erzeugen, wenn die Sekundärstrahlung spektrale Eigenschaften aufweist, die in einem gespeicherten Erkennungsziel enthalten sind,
wobei zumindest eine Primärstrahlungsfrequenz derart ausgestaltet ist, dass der Faradaykäfig und die Fracht Abmessungen besitzen, die geeignet sind, die Primär- und Sekundärstrahlung zurückzustrahlen;
das Spektralanalysesystem ausgestaltet ist, die Sekundärstrahlung in zwei Spektralintervallen zu analysieren, die sich jeweils 0,1 Hz bis 100 Hz von der Primärstrahlungsfrequenz entfernt auf beiden Seiten der Primärstrahlungsfrequenz befinden; und
das Erkennungsziel Bewegungen entspricht, die durch mobile Teile eines Körpers erzeugt werden.

2. Erkennungsvorrichtung nach Anspruch 1, wobei die Primärstrahlung eine Frequenz von 100 MHz bis 100 GHz besitzt.

3. Erkennungsvorrichtung nach Anspruch 1 oder 2, wobei das Hochfrequenzsende- und - empfangssystem (7) heterodyner Art ist.

4. Erkennungsvorrichtung nach einem der vorangehenden Ansprüche, wobei das Erkennungsziel propriorezeptiven Bewegungen, Atembewegungen oder Herzbewegungen eines den Körper bildenden Lebewesens entspricht.

5. Erkennungsvorrichtung nach einem der vorangehenden Ansprüche, wobei die Primärstrahlung mehrere Komponenten mit jeweils unterschiedlichen Frequenzen besitzt.

6. Erkennungsvorrichtung nach einem der vorangehenden Ansprüche, wobei das Hochfrequenzsende- und -empfangssystem (7) ausgestaltet ist, die zumindest eine Primärstrahlungsfrequenz in einer Abfolge bestimmter Werte mit einer verzögerten Empfangszeit zwischen zwei aufeinanderfolgend gesteuerten Frequenzwerten zu variieren.

7. Erkennungsvorrichtung nach einem der vorangehenden Ansprüche, wobei die Umgrenzungseinrichtung (1) zumindest eine Tür (2 - 4) umfasst, die zum Faradaykäfig beiträgt, wenn sie geschlossen ist.

8. Erkennungsvorrichtung nach einem der Ansprüche 1 bis 7, wobei die Umgrenzungseinrichtung (1) einen geschlossenen Raum zum Abstellen eines Fahrzeugs umfasst, mit zumindest einer Zufahrtstür für das Fahrzeug, Wänden, einer Decke und einem Boden, die alle elektrisch leitend sind.

9. Erkennungsvorrichtung nach einem der Ansprüche 1 bis 7, wobei die Umgrenzungseinrichtung (1) ein Zelt mit elektrisch leitenden Flächen umfasst, wobei das Zelt in einem unteren Bereich offen und ausgestaltet ist, über eine Fracht geführt und auf einem elektrisch leitenden Bodenabschnitt (101) um die Fracht herum angeordnet zu werden.

10. Erkennungsvorrichtung nach Anspruch 9, wobei das Zelt ausgestaltet ist, aus einer gefalteten Konfiguration entfaltet und nach Gebrauch wieder zusammengefaltet zu werden.

11. Erkennungsvorrichtung nach einem der Ansprüche 1 bis 7, ferner umfassend ein Fördersystem (102), das ausgestaltet ist, die Fracht (100) in die Umgrenzungseinrichtung (1) einzuführen.

12. Verfahren mit elektromagnetischen Wellen zur Erkennung der Bewegung eines vor der Sicht maskierten Körpers in einer für elektromagnetische Wellen zumindest teilweise durchlässigen Fracht (100), umfassend die folgenden Schritte:
/1/ das Bestimmen eines Erkennungsziels für spektrale Eigenschaften, das Bewegungen entspricht, die durch mobile Teile eines Körpers erzeugt werden;
/2/ das Ausbilden eines Faradaykäfigs um die Fracht herum;
/3/ innerhalb des Faradaykäfigs das Erzeugen einer elektromagnetischen Primärstrahlung mit zumindest einer Frequenz, die derart ausgestaltet ist, dass die Strahlung innerhalb des Faradaykäfigs und der Fracht zurückgestrahlt wird, und das Aktivieren eines Systems zur Erkennung von elektromagnetischer Sekundärstrahlung in zwei Spektralintervallen, die sich jeweils 0,1 Hz bis 100 Hz von der Primärstrahlungsfrequenz entfernt auf beiden Seiten der Primärstrahlungsfrequenz befinden;
/4/ das Spektralanalysieren der erkannten Sekundärstrahlung, um die spektralen Eigenschaften der Sekundärstrahlung zu erhalten;
/5/ das Erzeugen eines Alarmsignals, wenn die spektralen Eigenschaften der Sekundärstrahlung im Erkennungsziel enthalten sind.

13. Erkennungsverfahren nach Anspruch 12, das unter Verwendung einer Erkennungsvorrichtung nach einem der Ansprüche 1 bis 11 ausgeführt wird.

14. Erkennungsverfahren nach Anspruch 12 oder 13, wonach der Körper zu einem innerhalb der Fracht (100) befindlichen Lebewesen gehört.

15. Erkennungsverfahren nach einem der Ansprüche 12 bis 14, ferner umfassend einen zusätzlichen Lernschritt, um Fehlalarme zu vermeiden, die durch parasitäre Bewegungen außerhalb des Körpers ausgelöst werden und spektrale Eigenschaften für die Sekundärstrahlung erzeugen, welche im Erkennungsziel enthalten sind, oder um Fehlalarme zu vermeiden, die durch Bewegungen ausgelöst werden, welche in Bezug auf ein bestimmtes Untersuchungsziel für den Körper ohne Interesse sind.

16. Verfahren nach Anspruch 13, wonach die Erkennungsvorrichtung dem Anspruch 9 entspricht und zuvor eine elektrisch leitende Flüssigkeit (101) auf dem Bodenabschnitt verteilt oder in den Bodenabschnitt injiziert wird.

## Claims

1. Apparatus using electromagnetic waves to detect movement of a body hidden from view, in a load (100) at least partially transparent to electromagnetic waves, said apparatus comprising:
- an enclosure device (1) designed to contain the load and to form a Faraday cage around said load;
- a radiofrequency transmission-reception system (7) configured to produce a primary electromagnetic radiation inside the Faraday cage and load and to detect at least a secondary electromagnetic radiation generated from the primary radiation by a movement occurring in the load; and
- a spectral analysis system (8), having an input connected to a detection output of the transmission-reception system, and being configured to produce an alarm signal if the secondary radiation exhibits spectral characteristics falling within a stored detection target,
wherein at least one frequency of the primary radiation is adapted so that the Faraday cage and the load are of dimensions capable of reverberating said primary and secondary radiations,
the spectral analysis system is configured to analyze the secondary radiation in two spectral ranges each located within between 0.1 Hz and 100 Hz from the frequency of the primary radiation on each side of said frequency of the primary radiation; and
the detection target corresponds to movements generated by moving parts of a body.

2. Detection apparatus as claimed in claim 1, wherein the primary radiation has a frequency of between 100 MHz and 100 GHz.

3. Detection apparatus as claimed in claim 1 or 2, wherein the radiofrequency transmission-reception system (7) is of the heterodyne type.

4. Detection apparatus as claimed in any one of the preceding claims, wherein the detection target corresponds to proprioceptive, respiratory or cardiac movements of a living being constituting said body.

5. Detection apparatus as claimed in any one of the preceding claims, wherein the primary radiation has several components with different respective frequencies.

6. Detection apparatus as claimed in any one of the preceding claims, wherein the radiofrequency transmission-reception system (7) is configured to vary said at least one frequency of the primary radiation based on a sequence of given values, with a reception latency time between two successively controlled frequency values.

7. Detection apparatus as claimed in any one of the preceding claims, wherein the enclosure device (1) comprises at least one door (2-4) forming part of the Faraday cage when the door is closed.

8. Detection apparatus as claimed in any one of claims 1 to 7, wherein the enclosure device (1) comprises a closed parking enclosure for said vehicle, having at least one entrance door for said vehicle, walls, a ceiling and a floor, all of which are electrically conducting.

9. Detection apparatus as claimed in any one of claims 1 to 7, wherein the enclosure device (1) comprises a tent with electrically conducting surfaces, said tent being open at a bottom section and adapted to be positioned from the top of the load and placed around said load on an electrically conducting floor portion (101).

10. Detection apparatus as claimed in claim 9, wherein the tent is configured to be deployed from a folded configuration and then refolded after use.

11. Detection apparatus as claimed in any one of claims 1 to 7, further comprising a conveyor system (102) configured to introduce the load (100) into the enclosure device (1).

12. Method using electromagnetic waves to detect movement of a body hidden from view, in a load (100) at least partially transparent to the electromagnetic waves, comprising the following steps:
/1/ determining a detection target for spectral features corresponding to movements generated by moving parts of a body;
/2/ forming a Faraday cage around the load;
/3/ producing, inside the Faraday cage, a primary electromagnetic radiation having at least one frequency adapted so that the radiation is reverberated inside the Faraday cage and load, and activating a system for detecting secondary electromagnetic radiation in two spectral ranges each located within between 0.1 Hz and 100 Hz from the frequency of the primary radiation on each side of said frequency of the primary radiation;
/4/ spectrally analyzing the detected secondary radiation to obtain the spectral features of said secondary radiation; and
/5/ producing an alarm signal if the spectral features of the secondary radiation fall within the detection target.

13. Detection method as claimed in claim 12, implemented using a detection apparatus as claimed in any one of claims 1 to 11.

14. Detection method as claimed in claim 12 or 13, whereby the body belongs to a living being located inside the load (100).

15. Detection method as claimed in any one of claims 12 to 14, further comprising a supplementary training step in view of preventing false alarms caused by parasitic movements which are external to the body and which produce spectral features for the secondary radiation falling within the detection target, or in view of preventing false alarms caused by movements of no interest with respect to a predefined objective of searching for the body.

16. Method as claimed in claim 13, whereby the detection apparatus is as claimed in claim 9 and an electrically conducting liquid (101) is spread beforehand on the floor portion or injected into said floor portion.
